(19) Europäisches Patentamt
European Patent Office
Office européen des brevets

(11) **EP 1 741 996 A2**

(12) **EUROPÄISCHE PATENTANMELDUNG**

(43) Veröffentlichungstag:
**10.01.2007 Patentblatt 2007/02**

(51) Int Cl.:
**F24J 2/20** (2006.01)

(21) Anmeldenummer: **05028255.7**

(22) Anmeldetag: **22.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **13.06.2005 EP 05012320**

(71) Anmelder: **Mostafa, Kamal, Dr.**
**42113 Wuppertal (DE)**

(72) Erfinder: **Mostafa, Kamal, Dr.**
**42113 Wuppertal (DE)**

(74) Vertreter: **Berg, Eike Karl**
**Rechtsanwalt**
**Zur Ziegelei 8**
**42943 Flensburg-Tastrup (DE)**

(54) **Solarkollektor und Solarwärmesystem unter Verwendung desselben**

(57) Vorgeschlagen wird ein Solarkollektor (1) mit einer sonnenzugewandten ersten Seite und einer ihr gegenüberliegenden zweiten Seite, umfassend

o mindestens eine lichtdurchlässige Komponente (2) zur Einkopplung von Sonnenstrahlen in den Solarkollektor,
o eine lichtundurchlässigen Aufheizplatte (3) zur Absorption von Wärme,
o eine Basisplatte (4),

**dadurch gekerinzeichnet,** dass
• eine der beiden Platten aus Aufheizplatte (3) und Basisplatte (4) mit einer umlaufenden Aufkantung (5) zur Ausbildung einer zwischen Aufheizplatte (3) und Basisplatte (4) gelegenen flüssigkeitsdichten Wanne verbunden ist,
• im Inneren des durch die Wanne begrenzten Raums eine Vielzahl von Stegen (7) vorgesehen sind, zwischen denen Durchflutungskanäle (6) mit einer inneren Breite ($d_1$) ausgearbeitet sind, wobei
die Durchflutungskanäle (6) mit einer gemeinsamen Zuleitung (8) und einer gemeinsamen Abführung (9) verbunden sind, und
die Durchflutungskanäle (6) zusammen mit der Zuleitung (8) und der Abführung (9) im Inneren des durch die Wanne begrenzten Raums ein Volumen ($V_1$) umschließen, durch das eine Flüssigkeit ($F_1$) zur Abführung der absorbierten Wärme hindurchführbar ist,
• die durch die umlaufenden Aufkantung (5) zusammen mit einer der beiden Platten aus Aufheizplatte (3) und Basisplatte (4) begrenzte Wanne mit der anderen Platte aus Aufheizplatte (3) und Basisplatte (4) verschlossen ist zur Ausbildung einer sauerstoffdichten Ummantelung des Volumens ($V_1$), wobei die auf das Volumen ($V_1$) bezogene Sauerstoffdichtheit $O_{d,1}$ der folgenden Formel genügt:

$$O_{d,1} \leq 0,10 \text{ g} / (\text{m}^3 \cdot d_1)$$

Die Erfindung betrifft auch Solarwärmesysteme unter Verwendung eines solchen Solarkollektors.

Figur 1.

**Beschreibung**

Die Erfindung betrifft einen Solarkollektor mit einer sonnenzugewandten, frontseitig angeordneten, lichtdurchlässigen Komponente, einer darunter angeordneten lichtundurchlässigen Aufheizplatte und einer rückseitig vorgesehenen Basisplatte. Die Erfindung betrifft auch ein Solarwärmesystem unter Einbindung von mindestens einem der hier vorgeschlagenen Solarkollektoren. Das Solarwärmesystem umfasst dabei ferner mindestens ein wärmeabstrahlendes Element und/oder eine Brauchwasserentnahmestelle.

In ihrer grundlegenden Konstruktion können wasserdurchströmte Solarkollektoren und mit heißem Wasser betriebene Heißstrahlelemente vergleichbar aufgebaut sein. Aus dem vorveröffentlichten Stand der Technik sind wasserdurchströmte Wärmetauscher mit eingearbeiteten Durchströmungskanälen bekannt. So schlägt beispielsweise die US-A-5,267,611 einen Wärmetauscher mit einer porösen Schicht als Zentralelement vor, das einerseits der nach außen abschließenden Heizfläche und andererseits einer Flüssigkeitsversorgungsschicht benachbart gelegen ist. Die Flüssigkeitsversorgungsschicht ist mit fortlaufenden, sich rechtwinkelig kreuzenden Kanälen durchzogen, die voneinander durch rechteckige "Insel"-Bereiche getrennt sind. Zur Wasserabdichtung des bekannten Wärmetauschers nach außen hin ist um die poröse Zentralschicht und um die Flüssigkeitsversorgungsschicht eine Abdichtungsschicht mit diese durchbrechenden Anschlussrohren vorgesehen, wobei durch Letztere der Flüssigkeitsaustausch ermöglicht wird.

Auch der SU11 65 868-A ist der Vorschlag für einen Wärmetauscher zu entnehmen, der in seinem Inneren mit Paketen poröser Platten bestückt ist, zwischen denen nicht poröse Auskleidungen zur Ausformung von Kanälen vorgesehen sind. Der Wärmetauscher wird von einer Heizflüssigkeit durchströmt, die ihre Wärme beim Passieren der porösen Platten an den Wärmetauscher abgibt.

Aus der DE197 80 808T ist eine Betonplatte zur Luftkonditionierung bekannt, bei der unterhalb einer abschließenden Betonschicht eine Styroporschicht vorgesehen ist, in die zahlreiche Rillen eingearbeitet sind. In den Rillen der Styroporschicht sind Kapillarrohre eingesetzt, die von einer temperierenden Flüssigkeit durchströmt sind.

Schließlich ist aus der DE29 16 799 B1 eine quarderförmige Heiß- und Kühleinheit bekannt, die bevorzugt einstückig aus einem Keramikschaum gefertigt ist, in den zick-zack-förmig ein Kanalmuster eingearbeitet ist. Die Kanäle sind nach außen mit Anschlussstücken versehen, durch die eine Flüssigkeit der Einheit zugeführt und aus der Einheit abgezogen werden kann. Die Wandungen der bekannten Heiß- und Kühleinheit sollen eine höhere Wärmeleitfähigkeit aufweisen als der Keramikschaum im Inneren der Heiß- und Kühleinheit.

Der Erfinder erkannte es als einen großen Nachteil, dass die aus dem oben diskutierten Stand der Technik bekannten Wärmetauscher, die insbesondere zur Erwärmung von Räumen vorgesehen sind, nicht direkt in bereits vorhandene Kühl- und Heizungskreisläufe bzw. allgemeiner in bereits vorhandene Wasserkreisläufe eingebunden werden können, da alle bekannten wärmetauschenden Einheiten zwar dicht gegenüber den in ihnen fließenden Flüssigkeiten, hingegen nicht ausreichend dicht gegenüber der Außenluft sind. Durch Sauerstoff, der die Außenhülle der bekannten wärmetauschenden Elemente durchdringen kann, kommt es zu Korrosionserscheinungen an den aus Metall oder Grauguss gefertigten Bauteilen in bereits vorhandenen Kühlund Heizungskreisläufen, in deren Folge die Durchströmungskanäle insbesondere der wärmetauschenden Elemente mit Rostschlamm verstopfen. Vor diesem Hintergrund sind die bekannten wärmetauschenden Elemente ausschließlich in separaten Wasserkreisläufen zu betreiben, in denen nur nicht-korrosive Materialien Verwendung finden. Die Realisierung einer hydraulischen Trennung von vorhandenen Kühl- und Heizungskreisläufen zu neu zu installierenden Wasserkreisläufen für die wärmetauschenden Elemente ist jedoch kostenintensiv und die dann einzusetzenden Wärmetauscher weisen zu geringe thermische Wirkungsgrade auf, so dass in Folge der notwendigen hydraulischen Trennung große Energieverluste zu beklagen sind.

Es ist folglich Aufgabe der vorliegenden Erfindung, der Öffentlichkeit einen neuartigen Solarkollektor zur Verfügung zu stellen, der auch in bauseitig bereits vorhandenen Wasserkreisläufen betrieben werden kann und das Problem der Rostverschlammung nachhaltig zu lösen vermag. Die Aufgabe betrifft auch ein Solarwärmesystem, für das genauso das genannte Problem der Rostverschlammung zu lösen ist.

Nach zahlreichen Versuchen erkannte der Erfinder, dass eine solche Aufgabe zu lösen ist mittels eines Solarkollektors, der eine sonnenzugewandte erste Seite und eine ihr gegenüberliegende zweite Seite aufweist und der

- o mindestens eine lichtdurchlässige Komponente zur Einkopplung von Sonnenstrahlen in den Solarkollektor,

- o eine lichtundurchlässigen Aufheizplatte zur Absorption von Wärme und

- o eine Basisplatte

umfasst, wobei

- eine der beiden Platten aus Aufheizplatte und Basisplatte mit einer umlaufenden Aufkantung zur Ausbildung einer zwischen Aufheizplatte und Basisplatte gelegenen flüssigkeitsdichten Wanne verbunden ist,
- im Inneren des durch die Wanne begrenzten Raums eine Vielzahl von Stegen vorgesehen sind, zwischen denen Durchflutungskanäle mit einer inneren Breite ($d_1$) ausgearbeitet sind, und wobei

die Durchflutungskanäle mit einer gemeinsamen Zuleitung und einer gemeinsamen Abführung verbunden sind, und

die Durchflutungskanäle zusammen mit der gemeinsamen Zuleitung und der gemeinsamen Abführung im Inneren des durch die Wanne begrenzten Raums ein Volumen ($V_1$) umschließen, durch das eine Flüssigkeit ($F_1$) zur Abführung der absorbierten Wärme hindurchführbar ist,

- die durch die umlaufenden Aufkantung zusammen mit einer der beiden Platten aus Aufheizplatte und Basisplatte begrenzte Wanne mit der anderen Platte aus Aufheizplatte und Basisplatte verschlossen ist zur Ausbildung einer sauerstoffdichten Ummantelung des Volumens ($V_1$), wobei die auf das Volumen ($V_1$) bezogene Sauerstoffdichtheit $O_{d,1}$ der folgenden Formel genügt:

$$O_{d,1} \leq 0{,}10 \text{ g } / \text{ (m}^3 \cdot d_1)$$

In der obigen Formel mit g = Gramm und $m^3$ = Kubikmeter ist $d_1$ die innere Breite der Durchflutungskanäle im Inneren des Solarkollektors; die Formel für die Sauerstoffdichtheit $O_{d,1}$ gibt letztendlich einen oberen Grenzwert für die maximal zulässige Sauerstoffdurchlässigkeit in Gramm (Sauerstoff) an. Die Bestimmung der Sauerstoffdichtheit $O_{d,1}$ geschieht im Sinne der vorliegenden Schrift gemäß den Vorgaben der DIN 4726 in der Fassung aus Januar 2000, wobei die für Rohrleitungen aus Kunststoff geltenden DIN-Vorgaben auf den erfindungsgemäßen Solarkollektor sinngemäß zu übertragen sind.

Die Bemessung der Sauerstoffdichtheit $O_{d,1}$ erfolgt an einem durch die lichtundurchlässige Aufheizplatte, die Basisplatte und die umlaufende Aufkantung begrenzten Körper, der angrenzend an die Aufheizplatte zur Bildung des erfindungsgemäßen Solarkollektors noch eine lichtdurchlässige Komponente aufweist. Diesem Körper kann durch die gemeinsame Zuleitung Wasser zugeführt und durch die gemeinsame Abführung wieder entnommen werden. Nach Montage und rohrseitiger Verbindung erfolgt eine 24-stündige Relaxationszeit ohne Belastung. Danach wird der Körper einer Temperaturwechselbelastung mit einer Schaltzeit von ($60 \pm 30$) sec unterworfen, wobei im Wechsel 15 Minuten warmes Wasser von 70°C $\pm$ 2 K (K = Kelvin) und 15 Minuten kaltes Wasser von $\leq$ 20°C durch die Durchflutungskanäle des Körpers strömt, bei einem Überdruck von 3 bar. Diese Temperaturwechselbelastung wird über 28 Tage aufrechterhalten. Im Anschluss daran erfolgt die Messung der Sauerstoffdurchlässigkeit bei einer mittleren Temperatur von 40°C $\pm$ 2 K. Die Temperaturdifferenz zwischen gemeinsamer Zuleitung und gemeinsamer Abführung darf 4 K nicht überschreiten. Es sind 3 Einzelmessungen durchzuführen. Der größte und der kleinste Wert dürfen sich um nicht mehr als 0,02 g / (m$^3 \cdot d_1$) unterscheiden. Der ermittelte Mittelwert, auf den sich die Formel It. Anspruch 1 bzw. It. Anspruch 7, erster Punkt, bezieht, wird auf 2 Dezimalstellen gerundet.

Demnach genügt die auf das Volumen ($V_1$) bezogene Sauerstoffdichtheit $O_{d,1}$ des erfindungsgemäßen Solarkollektors in einer bevorzugten Ausführungsform der folgenden Formel:

$$O_{d,1} \leq 0{,}085 \text{ g } / \text{ (m}^3 \cdot d_1)$$

Für die mindestens eine lichtdurchlässige Komponente zur Einkopplung von Sonnenstrahlen in den erfindungsgemäßen Solarkollektor ist in bekannter Art und Weise bevorzugt eine Glasscheibe vorgesehen, ganz besonders bevorzugt können auch zwei geschichtet montierte Glasscheiben genutzt werden. Die mindestens eine Glasscheibe dient zunächst dazu, Sonnenstrahlen in Form von Licht in den Solarkollektor einzukoppeln. Das Licht trifft dann auf die Oberfläche der lichtundurchlässigen Aufheizplatte, wo es von der bevorzugt geschwärzten Aufheizplattenoberfläche absorbiert und in längerwellige Wärmestrahlung umgewandelt wird. Die mindestens eine Glasscheibe dient dann weiter dazu, eine Abkühlung der Aufheizplattenoberfläche an der Umgebungsluft zu verhindern. Dies geschieht unter anderem auch durch eine Reflexion der von der Aufheizplatte abgestrahlten Wärmestrahlung zurück auf die Aufheizplatte. Es gilt als bevorzugt, die mindestens eine Glasscheibe mit einer Innenprismierung zu versehen, um die Reflexion der Wärmestrahlung an der mindestens einen Glasscheibe zurück auf die Aufheizplatte zu optimieren.

Mit Ausnahme der mindestens einen lichtdurchlässigen Komponente zur Einkopplung von Sonnenstrahlen unterscheiden sich der erfindungsgemäße Solarkollektor, der diese mindestens eine Komponente aufweist, und das mindestens eine wärmeabstrahlende Element, das diese mindestens eine Komponente nicht aufweist, in ihrer jeweiligen Grundkonstruktion nicht. Das wärmeabstrahlende Element ist in Form von flüssigkeitsdurchfluteten Mitteln zum Temperieren von Räumen ausgebildet und als solches Teil des erfindungsgemäßen Solarwärmesystems in zahlreichen beanspruchten Varianten. In einer ersten Variante sieht das erfindungsgemäße Solarwärmesystem mindestens einen Solarkollektor vor, wie er oben bereits beschrieben wurde. Neben dem Solarkollektor weist das hier vorgeschlagene Solarwärmesystem mindestens ein wärmeabstrahlendes Element, ausgebildet als flüssigkeitsdurchflutete Mittel zum Temperieren von Räumen auf, umfassend

■ eine erste Abdeckplatte,
■ eine der ersten Abdeckplatte gegenüberliegende zweite Abdeckplatte, die mit einer umlaufenden Aufkantung verbunden ist zur Ausbildung einer flüssigkeitsdichten Wanne,

■ mit einer Vielzahl von Stegen, zwischen denen Durchflutungskanäle mit einer inneren Breite ($d_{101}$) im Inneren des durch die Wanne begrenzten Raums ausgebildet sind, wobei

die Durchflutungskanäle mit einer gemeinsamen Zuleitung und einer gemeinsamen Abführung verbunden sind, und

die Durchflutungskanäle zusammen mit der gemeinsamen Zuleitung und der gemeinsamen Abführung im Inneren des durch die Wanne begrenzten Raums ein Volumen ($V_{101}$) umschließen, durch das eine Flüssigkeit ($F_2$) zum Temperieren von Räumen hindurchführbar ist,

und wobei

■ die durch die zweite Abdeckplatte mit der umlaufenden Aufkantung begrenzte Wanne mit der ersten Abdeckplatte verschlossen ist zur Ausbildung einer sauerstoffdichten Ummantelung des Volumens ($V_{101}$), wobei die auf das Volumen ($V_{101}$) bezogene Sauerstoffdichtheit $O_{d,101}$ der folgenden Formel genügt:

$$O_{d,101} \leq 0{,}10 \ g \ / \ (m^3 \cdot d_{101})$$

In der obigen Formel mit g = Gramm und $m^3$ = Kubikmeter ist $d_{101}$ die innere Breite der Durchflutungskanäle im Inneren der flüssigkeitsdurchfluteten Mittel zum Temperieren von Räumen; die Formel für die Sauerstoffdichtheit $O_{d,101}$ gibt letztendlich einen oberen Grenzwert für die maximal zulässige Sauerstoffdurchlässigkeit in Gramm (Sauerstoff) an. Die Bestimmung der Sauerstoffdichtheit $O_{d,101}$ geschieht im Sinne der vorliegenden Schrift gemäß den Vorgaben der DIN 4726 in der Fassung aus Januar 2000, wobei die für Rohrleitungen aus Kunststoff geltenden DIN-Vorgaben auf die erfindungsgemäßen Mittel zum Temperieren von Räumen sinngemäß zu übertragen sind.

Die Bemessung der Sauerstoffdichtheit $O_{d,101}$ erfolgt an einem durch die erste und zweite Abdeckplatte mit umlaufender Aufkantung begrenzten Körper, dem Wasser durch die gemeinsame Zuleitung zugeführt und durch die gemeinsame Abführung wieder entnommen werden kann. Nach Montage und rohrseitiger Verbindung erfolgt eine 24-stündige Relaxationszeit ohne Belastung. Danach wird der Körper einer Temperaturwechselbelastung mit einer Schaltzeit von (60 $\pm$ 30) sec unterworfen, wobei im Wechsel 15 Minuten warmes Wasser von 70°C $\pm$ 2 K (K = Kelvin) und 15 Minuten kaltes Wasser von $\leq$ 20°C durch die Durchflutungskanäle des Körpers strömt, bei einem Überdruck von 3 bar. Diese Temperaturwechselbelastung wird über 28 Tage aufrechterhalten. Im Anschluss daran erfolgt die Messung der Sauerstoffdurchlässigkeit bei einer mittleren Temperatur von 40°C $\pm$ 2 K. Die Temperaturdifferenz zwischen gemeinsamer Zuleitung und gemeinsamer Abführung darf 4 K nicht überschreiten. Es sind 3 Einzelmessungen durchzuführen. Der größte und der kleinste Wert dürfen sich um nicht mehr als 0,02 g / ($m^3 \cdot d$) unterscheiden. Der ermittelte Mittelwert, auf den sich die Formel lt. Anspruch 2 und 4 bzw. lt. Anspruch 7, zweiter Punkt, bezieht, wird auf 2 Dezimalstellen gerundet.

Demnach genügt die auf das Volumen ($V_{101}$) bezogene Sauerstoffdichtheit $O_{d,101}$ der erfindungsgemäßen Mittel zum Temperieren von Räumen in einer bevorzugten Ausführungsform der folgenden Formel:

$$O_{d,101} \leq 0{,}085 \ g \ / \ (m^3 \cdot d_{101})$$

In einer zweiten Variante sieht das erfindungsgemäße Solarwärmesystem mindestens einen Solarkollektor vor, wie er oben bereits beschrieben wurde. Neben dem Solarkollektor weist das Solarwärmesystem entsprechend der hier vorgeschlagenen zweiten Variante mindestens eine Entnahmestelle von Brauchwasser ($F_3$) auf, das durch die vom Solarkollektor absorbierte Wärmestrahlung erwärmt ist. Zu diesem Zweck umfasst das Solarwärmesystem neben dem Solarkollektor und der mindestens einen Entnahmestelle von Brauchwasser auch noch eine wärmetauschende Komponente, in der das Brauchwasser ($F_3$) mit Hilfe der Flüssigkeit ($F_1$), die durch den Solarkollektor hindurchführbar ist, erwärmbar ist.

In einer weiteren Variante werden die zuvor vorgeschlagene erste und die zweite Variante des erfindungsgemäßen Solarwärmesystems zusammengefasst, so dass ein solches System mindestens einen Solarkollektor, wie er oben bereits beschrieben wurde, mindestens ein wärmeabstrahlendes Element, ausgebildet als flüssigkeitsdurchflutete Mittel zum Temperieren von Räumen, wie es oben bereits beschrieben wurde, mindestens eine Entnahmestelle von Brauchwasser ($F_3$) und mindestens eine wärmetauschende Komponente zur Erwärmung des Brauchwassers ($F_3$) mit Hilfe der Flüssigkeit ($F_1$), die durch den Solarkollektor hindurchführbar ist, aufweist. Sowohl für diese wie auch für die zuvor vorgestellte zweite Variante des erfindungsgemäßen Solarwärmesystems gilt es als bevorzugt, wenn die wärmetauschende Komponente, in der das Brauchwasser ($F_3$) mit Hilfe der Flüssigkeit ($F_1$), die durch den Solarkollektor hindurchführbar ist, erwärmbar ist, einen Innentank zur Bevorratung des Brauchwassers ($F_3$) enthält. In und/oder um den Innentank bzw. in die Innenwandung des Innentanks ist mäander- und/oder spiralförmig eine Rohrleitung verlegt, in der die im Solarkollektor erhitzte Flüssigkeit ($F_1$), bevorzugt Wasser, ihre Wärme an das im Innentank bevorratete Brauchwasser ($F_3$) abgeben kann. Die so abgekühlte Flüssigkeit ($F_1$) wird anschließend dem Solarkollektor wieder zugeführt.

Zur Versorgung des bevorzugt vorgesehenen mindestens einen wärmeabstrahlenden Elements wird entweder die Flüssigkeit ($F_1$) des Solarkollektors dem wärmeabstrahlenden Element zugeführt, von wo aus die Flüssigkeit dem Solarkollektor wieder zugeleitet wird, das bedeutet ($F_1$) ist gleich ($F_2$), oder die Flüssigkeit ($F_2$) für das mindestens eine wärmeabstrahlende Element wird mittels der wärmetauschenden Komponente erwärmt.

In einer bevorzugten Form umfasst die wärmetauschende Komponente elektrische Heizmittel zum Beispiel in Form elektrischer Heizleitungen oder elektrischer Heizfolien in ihrer Wandung zum Innentank hin. Auf diese Weise kann das Brauchwasser ($F_3$) und gegebenenfalls auch das Wasser ($F_2$) zur Hindurchführung durch das mindestens eine wärmeabstrahlende Element genügend erhitzt werden, auch wenn die Sonnenbestrahlung des Solarkollektors für eine ausreichende Erhitzung der durch den Solarkollektor geführten Flüssigkeit ($F_1$) nicht ausreichend ist.

Hinsichtlich der ersten und/oder dritten Variante des erfindungsgemäßen Solarwärmesystems sind bevorzugt die zweite Abdeckplatte des mindestens einen wärmeabstrahlenden Elements und die mit ihr verbundene umlaufende Aufkantung einstückig ausgebildet. Auch wenn nicht darauf beschränkt, gilt es im Sinne der vorliegenden Erfindung weiterhin als bevorzugt, wenn die zweite Abdeckplatte und die mit ihr verbundene umlaufende Aufkantung als ein zusammenhängendes Gussteil vorliegt, das aus

- einem - bevorzugt mindestens 1 mm dicken - Material auf Basis von Epoxydharz oder

- einem - bevorzugt mindestens 3 mm dicken - Material auf Basis von Polyurethanharz oder

- einem - bevorzugt mindestens 6 mm dicken - Material auf Basis von Polyesterharz

besteht. Die genannten Materialien, zu denen als weitere Alternative auch noch vernetztes Polyethylen gehört, können gegebenenfalls mit ergänzenden Komponenten vermischt sein, weshalb sich dann die bevorzugt beanspruchten Dicken etwas vergrößern können. In diesem Zusammenhang ist es bevorzugt, wenn die Abdeckplatte, ausgewählt aus erster und zweiter Abdeckplatte, die der mindestens einen wärmeabstrahlenden Seite des wärmeabstrahlenden Elements zugewandt ist, insbesondere solche Füllstoffe aufweist, die die thermische Leitfähigkeit dieser Abdeckplatte steigern, wie beispielsweise Graphit oder Siliciumcarbid. Bei allen oben aufgeführten Materialien verbunden mit ihrer gießtechnischen Aufbereitung können in einem besonderem Maße flüssigkeitsdurchflutete Mittel zum Temperieren von Räumen hergestellt werden, die die erfindungsgemäße Merkmale aufweisen. Alternativ zur einstückigen Ausbildung von zweiter Abdeckplatte und umlaufender Aufkantung als Gussteil oder idealerweise in Ergänzung dazu sind die zweite Abdeckplatte und die Stege, zwischen denen die Durchflutungskanäle ausgebildet sind, einstückig und als Gussteil ausgebildet.

Ein Gussteil aus zweiter Abdeckplatte und umlaufender Aufkantung und bevorzugt zusätzlich versehen mit den Stegen, zwischen denen die Durchflutungskanäle ausgebildet sind, wird hergestellt, in dem zunächst eine passende erste Gießform als Negativform bereitgestellt wird. Eine solche Gießform sieht an ihrem Boden Vertiefungen für die umlaufende Aufkantung - und, sofern vorgesehen, die Vertiefungen für die Stege - vor. Das gießfähig aufbereitete Material wird sodann in die Gießform eingeleitet, bis die Vertiefungen in der Gießform für die umlaufende Aufkantung und, sofern vorgesehen, für die Stege aufgefüllt sind. Weiteres gießfähiges Material wird eingeleitet, bis eine ausreichende Dicke für die zweite Abdeckplatte erreicht ist.

Wenn gewünscht, können zwecks Dekoration oder zur Verstärkung oder auch aus anderen Gründen auf den Flüssigkeitsspiegel für die auszubildende zweite Abdeckplatte Gitter, Geflechte oder Vliese aufgelegt oder eine oder mehrere weitere Schichten angegossen werden.

In einer bevorzugten Verfahrensergänzung wird nun ein flexibler Stempel beispielsweise aus Schaumstoff oder Gummi auf den Flüssigkeitsspiegel der auszubildenden zweiten Abdeckplatte mit hohem Druck aufgesetzt, um das eingegossene Material zu komprimieren und gegebenenfalls entstandene Luftblasen herauszupressen. Vor der abschließenden Entformung der dann fertig gestellten Wanne aus zweiter Abdeckplatte und umlaufende Aufkantung und gegebenenfalls aus den Stegen zwischen den Durchflutungskanälen erfolgt zumindest teilweise eine Trocknung und/oder Härtung. Nach der Entformung wird die Wanne gegebenenfalls endgetrocknet und/oder -gehärtet.

Es ist vorgesehen, dass auch die erste Abdeckplatte des mindestens einen wärmeabstrahlenden Elements als Gussteil vorliegt. Zur Herstellung der ersten Abdeckplatte können die gleichen Materialien verwendet werden wie zur Herstellung der zweiten Abdeckplatte. Insbesondere gilt als bevorzugt, wenn die erste Abdeckplatte aus

- einem - bevorzugt mindestens 1 mm dicken - Material auf Basis von Epoxydharz oder

- einem - bevorzugt mindestens 3 mm dicken - Material auf Basis von Polyurethanharz oder

- einem - bevorzugt mindestens 6 mm dicken - Material auf Basis von Polyesterharz,

gegebenenfalls mit ergänzenden Komponenten, wie beispielsweise Graphit oder Siliciumcarbid, besteht.

Die einstückige Herstellung von zweiter Abdeckplatte des mindestens einen wärmeabstrahlenden Elements zusammen mit der Aufkantung und den Stegen zwischen den Durchflutungskanälen ist selbstverständlich nur als eine bevorzugte Variante zu sehen. Selbstverständlich ist es genauso möglich, die erste Abdeckplatte einstückig mit den Stegen zwischen den Durchflutungskanälen herzustellen, während die zweite Abdeckplatte einstückig mit der Aufkantung hergestellt wird. In einer vereinfachten Fassung können erste und zweite Abdeckplatte, verschiedene Komponenten zur Bildung einer gemeinsamen Aufkantung und die einzelnen Stege zwischen auszubildenden Durchflutungskanälen einzeln hergestellt und passend zusammen geklebt werden. Ein solches Verfahren beinhaltet jedoch zahlreiche, insbesondere wirtschaftliche Nachteile; auch ist die Sicherstellung einer Sauerstoffdichtheit in einem besonderen Maße von der Qualität der dann zahlreichen Verklebung abhängig, was zwar grundsätzlich möglich, aber eben umständlicher ist, als die gießtechnische Herstellung von Formstücken mit einer Vielzahl angeformter Komponenten.

Zur Fertigstellung des mindestens einen wärmeabstrahlenden Elements als Mittel zum Temperieren von Räumen kann die vorgefertigte erste Abdeckplatte mit der vorgefertigten zweiten Abdeckplatte, letztere bevorzugt einstückig verbunden mit der umlaufenden Aufkantung und bevorzugt zusätzlich versehen mit den Stegen, zwischen denen die Durchflutungskanäle ausgebildet sind, flüssigkeits- und sauerstoffdicht verklebt werden. Bevorzugt ist jedoch ein Herstellungsverfahren, bei dem zunächst die zweite Abdeckplatte einstückig verbunden mit der umlaufenden Aufkantung und zusätzlich versehen mit den Stegen, zwischen denen die Durchflutungskanäle ausgebildet sind, fertig gestellt wird. Anschließend wird die erste Abdeckplatte als Gussteil bereitet. Dabei kann in eine zu verwendende zweite Gießform zunächst ein Gitter, Geflecht oder Vlies eingelegt werden zur späteren Verstärkung dieser auszubildenden ersten Abdeckplatte. Anschließend wird in die zweite Gießform clas fließfähig aufbereitete Material für die nun zu erstellende erste Abdeckplatte in einer solchen Menge eingegeben, bis sich die gewünschte Dicke für die erste Abdeckplatte ergibt. In den Flüssigkeitsspiegel für die auszubildende erste Abdeckplatte werden nun die mit der zweiten Abdeckplatte verbundene Stege und die umlaufende Ummantelung eingedrückt, so dass nach Trocknung und/oder Härtung ein erfindungsgemäßes Mittel zum Temperieren von Räumen als einstückiges Werkstück vorliegt. Gleichgültig, wie die Verbindung der ersten mit der zweiten Abdeckplatte erfolgt, ist es nicht nötig, dass die erste Abdeckplatte und die zweite Abdeckplatte mit umlaufender Aufkantung aus dem gleichen Material besteht, jedoch ist eine solche Ausführung bevorzugt.

Es ist möglich, dass die erste Abdeckplatte angegossene Führungsstege aufweist, die passgenau einführbar sind in die Durchflutungskanäle, welche zwischen den an die zweite Abdeckplatte angegossenen Stegen ausgebildet sind. Die Stege verbreitern sich in einer bevorzugten Ausführungsform zur zweiten Abdeckplatte hin jeweils in Form eines Viertelkreises. Die Führungsstege weisen außenseitig jeweils eine senkrechte Wandung auf, während sie innen halbkreisförmig ausgeformt sind. Eingeführt in die Durchflutungskanäle entstehen durch die speziellen Ausformung der Stege und der Führungsstege kreisrunde Rohrgebilde, durch die eine zugeführte Flüssigkeit ($F_2$) turbolenzfrei strömen kann.

Die erste und/oder zweite Abdeckplatte können durch eingearbeitete Gitter, Gewebe, Geflechte oder Vliese wie beispielsweise (Polyester-)Glasfasergewebe zur Steigerung des möglichen Innendrucks innerhalb der erfindungsgemäßen Mittel zum Temperieren von Räumen verstärkt sein. Die außenseitigen Oberflächen der ersten und/oder zweiten Abdeckplatte können zumindest teilweise so ausgebildet sein, dass sie anstreichbar und/oder tapezierbar sind. In einer bevorzugten Ausführungsform weist zumindest eine aus erster und zweiter Abdeckplatte Fliesen oder andere beschichtende Elemente auf. Auch können auf die erste und/oder zweite Abdeckplatte mosaikartig gestaltete Fliesen aus fließfähig aufbereitbarem Material angegossen werden. Selbstverständlich ist die Ausformung der ersten und/oder zweiten Abdeckplatte als Seifenhalter genauso möglich, wie werksseitig Befestigungsmittel wie beispielsweise Haltewinkel in die Abdeckplatten der erfindungsgemäßen Mittel zum Temperieren von Räumen eingearbeitet sein können.

Werden mehrere des mindestens einen wärmeabstrahlenden Elements als Mittel zum Temperieren von Räumen als Fußbodenbeläge in Nassräumen wie Duschen oder Badezimmer verlegt, kann die Ausgestaltung dieser wärmeabstrahlenden Elemente mit einer rutschhemmenden und/oder geriffelten und/oder gerillten Oberflächenstruktur sinnvoll sein. Die wärmeabstrahlenden Elemente sind letztlich mit jeder vorstellbaren Oberfläche, beispielsweise auch mit Spiegeln zu versehen und in unterschiedlichster Form, beispielsweise als Geländer oder Raumteiler mit beidseitig wärmeabstrahlender Oberfläche herstellbar.

In einer bevorzugten Ausführungsform sind in die erste und/oder zweite Abdeckplatte elektrische Heizelemente eingebettet. Diese elektrischen Heizelemente können insbesondere in der Form elektrischer Heizfolien und elektrischer Heizleitungen ausgebildet sein, wobei die Heizfolien wie auch die Heizleitungen bevorzugt mit Anschlussmitteln beispielsweise in Form von Buchsen zur elektrischen Versorgung mit Strom aus dem öffentlichen Versorgungsnetz oder eines vorgeschalteten Transformators versehen sind. Sehr gute Testergebnisse konnten dabei mit an den elektrischen Heizelementen anliegenden Versorgungsspannungen von 110 und 220 V (Wechselspannung) sowie 12, 24 und 40 V (Gleichspannung) gemacht werden. Kommen Heizleitungen zum Einsatz, sind diese bevorzugt mäanderförmig in der ersten und/oder zweiten Abdeckplatte verlegt. Auch ist es möglich, die Heizleitungen gitterförmig in der ersten und/oder zweiten Abdeckplatte auszubilden. Durch die im Fall der Einbettung elektrischer Heizleitungen in die erste und/oder zweite Abdeckplatte bevorzugt elektrisch isolierende Einstellung des Materials für die erste und/oder zweite Abdeckplatte können die elektrischen Heizleitungen auch ohne Isolierungen durch PVC, Teflon, Silikon o.ä. verwendet werden

Es ist vorstellbar, die elektrischen Heizelemente zur Einbettung in die erste und/oder zweite Abdeckplatte so auszugestalten, dass sie eine Vielzahl nebeneinander positionierter, flüssigkeitsdurchfluteter Mittel zum Temperieren von Räumen miteinander verbinden.

In einer weiteren bevorzugten Ausführungsform ist bei den wärmeabstrahlenden Elementen, ausgebildet als flüssigkeitsdurchflutete Mittel zum Temperieren von Räumen die innere Breite ($d_{101}$) der Durchflutungskanäle kleiner oder gleich der Breite ($s_{101}$) der zwischen den Durchflutungskanälen gelegenen Stege. Quer zur Verlaufsrichtung der Durchflutungskanäle sind pro Bezugseinheit von 1 cm bevorzugt mindestens 1 Durchflutungskanal und mindestens ein Steg ausgebildet. So zeigte sich in zahlreichen Versuchen, dass eine Breite ($d_{101}$) der Durchflutungskanäle von 2 bis 5 mm und eine Breite ($s_{101}$) der zwischen den Durchflutungskanälen gelegenen Stege von 2 bis 6 mm ausgezeichnete Versuchsergebnisse erwarten lässt. Es wird bevorzugt, wenn die Durchflutungskanäle zusammen mit der gemeinsamen Zuleitung und der gemeinsamen Abführung im Inneren des durch die Wanne begrenzten Raums ein Volumen ($V_{101}$) in einem Bereich von (0,2 bis 1,5) $\cdot 10^{-3}$ m³ umschließen.

Eingebunden in das erfindungsgemäße Solarwärmesystem werden die Durchflutungskanäle der wärmeabstrahlenden Elemente von einer Flüssigkeit ($F_2$) durchströmt, wobei hier insbesondere Wasser vorgesehen ist. Ganz besonders bevorzugt ist es, wenn die Flüssigkeit ($F_1$), die die Durchflutungskanäle des mindestens einen Solarkollektors durchströmt, gleich der Flüssigkeit ($F_2$) ist, die auch die Durchflutungskanäle des mindestens einen wärmeabstrahlenden Elements durchströmt. Innerhalb eines solchen Solarwärmesystems kommen dann bevorzugt als verbindende Rohrleitungen zwischen dem mindestens einen Solarkollektor und dem mindestens einen wärmeabstrahlenden Element solche Kunststoffrohre zum Einsatz, die hinsichtlich ihrer Dichtigkeit den Anforderungen der DIN 4726 in der Fassung aus Januar 2000 genügen.

In Messversuchen konnten Strömungsgeschwindigkeiten für das Wasser in den Durchflutungskanälen der wärmeabstrahlenden Elemente von 5 bis 10 cm/sec festgestellt werden. Die Strömung des Wassers in diesen Durchflutungskanälen ist damit laminar.

Die Ausführungen zu den Konstruktions- wie Herstellungsmerkmalen des mindestens einen wärmeabstrahlenden Elements als Teil des erfindungsgemäßen Solarwärmesystems sind sinngemäß auch für den erfindungsgemäßen Solarkollektor geltend. So gilt es genauso als bevorzugt, wenn eine der beiden Platten des Solarkollektors aus Aufheizplatte und Basisplatte mit der umlaufenden Aufkantung einstückig, ganz besonders bevorzugt als einstückiges Gussteil ausgebildet ist. Auch wenn nicht darauf beschränkt, gilt es im Sinne der vorliegenden Erfindung als bevorzugt, wenn dieses Gussteil aus

- einem - bevorzugt mindestens 1 mm dicken - Material auf Basis von Epoxydharz oder

- einem - bevorzugt mindestens 3 mm dicken - Material auf Basis von Polyurethanharz oder

- einem - bevorzugt mindestens 6 mm dicken - Material auf Basis von Polyesterharz

besteht. Die genannten Materialien, zu denen als weitere Alternative auch noch vernetztes Polyethylen gehört, können gegebenenfalls mit ergänzenden Komponenten vermischt sein, weshalb sich dann die beanspruchten Dicken etwas vergrößern können.

Eine der beiden Platten des Solarkollektors aus Aufheizplatte und Basisplatte kann in Ergänzung zu den obigen Ausführungen mit den Stegen, zwischen denen die Durchflutungskanäle ausgebildet sind, einstückig und als Gussteil ausgebildet. Dabei gilt es als besonders bevorzugt, wenn eine der beiden Platten des Solarkollektors aus Aufheizplatte und Basisplatte einstückig und als Gussteil mit der umlaufenden Aufkantung und mit den Stegen, zwischen denen die Durchflutungskanäle ausgebildet sind, verbunden ist.

Zur Herstellung des erfindungsgemäßen Solarkollektors kann die vorgefertigte erste der beiden Platten aus Aufheizplatte und Basisplatte, bevorzugt einstückig verbunden mit der umlaufenden Aufkantung und bevorzugt zusätzlich versehen mit den Stegen, zwischen denen die Durchflutungskanäle ausgebildet sind, mit der vorgefertigten zweiten der beiden Platten aus Aufheizplatte und Basisplatte, flüssigkeits-und sauerstoffdicht verklebt werden. Bevorzugt ist jedoch ein Herstellungsverfahren, bei dem zunächst die erste der beiden Platten aus Aufheizplatte und Basisplatte einstückig verbunden mit der umlaufenden Aufkantung und zusätzlich versehen mit den Stegen, zwischen denen die Durchflutungskanäle ausgebildet sind, insbesondere als Gussteil fertig gestellt wird. Anschließend wird die zweite der beiden Platten aus Aufheizplatte und Basisplatte als Gussteil bereitet. Dazu wird in eine passende Gießform das fließfähig aufbereitete Material für die zu erstellende zweite der beiden Platten aus Aufheizplatte und Basisplatte in einer solchen Menge eingegeben, bis sich die gewünschte Dicke für diese Platte ergibt. In den Flüssigkeitsspiegel für die auszubildende zweite der beiden Platten aus Aufheizplatte und Basisplatte werden nun die mit der ersten der beiden Platten aus Aufheizplatte und Basisplatte verbundene Stege und die umlaufende Ummantelung eingedrückt, so dass nach Trocknung und/oder Härtung ein einstückiges Werkstück vorliegt.

Gleichgültig, wie die Verbindung der ersten mit der zweiten der beiden Platten aus Aufheizplatte und Basisplatte erfolgt, ist es nicht nötig, dass diese beiden Platten, wovon die erste verbunden ist mit umlaufender Aufkantung und bevorzugt mit den Stegen zwischen den Durchflutungskanälen, aus dem gleichen Material bestehen, jedoch ist eine solche Ausführung bevorzugt.

Wenn die erste der beiden Platten aus Aufheizplatte und Basisplatte angegossene Stege aufweist, ist es möglich, dass die zweite der beiden Platten aus Aufheizplatte und Basisplatte angegossene Führungsstege aufweist, die passgenau einführbar sind in die Durchflutungskanäle, welche zwischen den an die erste der beiden Platten aus Aufheizplatte und Basisplatte angegossenen Stegen ausgebildet sind. Die Stege verbreitern sich in einer bevorzugten Ausführungsform zur ersten der beiden Platten aus Aufheizplatte und Basisplatte hin jeweils in Form eines Viertelkreises. Die Führungsstege weisen außenseitig jeweils eine senkrechte Wandung auf, während sie innen halbkreisförmig ausgeformt sind. Eingeführt in die Durchflutungskanäle entstehen durch die spezielle Ausformung der Stege und der Führungsstege kreisrunde Rohrgebilde, durch die eine zugeführte Flüssigkeit ($F_1$) turbolenzfrei strömen kann.

In einer bevorzugten Ausführungsform kann zumindest eine der beiden Platten aus Aufheizplatte und Basisplatte durch ein eingearbeitetes oder aufgebrachtes Gitter, Gewebe, Geflecht oder Vlies wie beispielsweise (Polyester-)Glasfasergewebe zur Steigerung des möglichen Innendrucks innerhalb des vorgeschlagenen Solarkollektors oder zur Steigerung seiner äußeren Stabilität verstärkt sein.

Zur Effektivitätssteigerung des vorgeschlagenen Solarkollektors sowie des erfindungsgemäßen Solarwärmesystems unter Einbindung des vorgeschlagenen Solarkollektors kann zwischen der lichtundurchlässigen Aufheizplatte und der lichtdurchlässigen Komponente des Solarkollektors bevorzugt eine dünne Metallplatte angeordnet sein. Als Metallplatte bietet sich dabei insbesondere ein Kupferblech an, das sinnvollerweise mit der Aufheizplatte unlöslich verbunden ist. Zur Verbindung von lichtundurchlässiger Aufheizplatte und Metallplatte bietet sich eine vollflächige Verklebung an, noch bessere Ergebnisse konnten erzielt werden, wenn die Aufheizplatte während ihres Herstellungsprozesses an die Metallplatte angegossen wird.

In einer weiteren bevorzugten Ausführungsform ist die innere Breite ($d_1$) der Durchflutungskanäle des erfindungsgemäßen Solarkollektors kleiner oder gleich der Breite ($s_1$) der zwischen den Durchflutungskanälen gelegenen Stege. Quer zur Verlaufsrichtung der Durchflutungskanäle sind pro Bezugseinheit von 1 cm bevorzugt mindestens 1 Durchflutungskanal und mindestens ein Steg ausgebildet. So zeigte sich in zahlreichen Versuchen, dass eine Breite ($d_1$) der Durchflutungskanäle von 2 bis 5 mm und eine Breite ($s_1$) der zwischen den Durchflutungskanälen gelegenen Stege von 2 bis 6 mm ausgezeichnete Versuchsergebnisse erwarten lässt. Es wird bevorzugt, wenn die Durchflutungskanäle zusammen mit der gemeinsamen Zuleitung und der gemeinsamen Abführung im Inneren des durch die Wanne begrenzten Raums ein Volumen ($V_1$) in einem Bereich von (0,2 bis 1,5)$\cdot 10^{-3}$ m$^3$ umschließen.

Die Durchflutungskanäle des erfindungsgemäßen Solarkollektors, It, zahlreicher Ausführungsvarianten und -formen auch eingebunden in gleichsam vorgeschlagene Solarwärmesysteme werden von einer Flüssigkeit ($F_1$) durchströmt, wobei hier insbesondere Wasser vorgesehen ist. In Messversuchen konnten Strömungsgeschwindigkeiten für das Wasser in den Durchflutungskanälen von 5 bis 10 cm/sec festgestellt werden. Die Strömung des Wassers in den Durchflutungskanälen ist damit laminar.

Die Erfindung soll anhand der folgenden Figuren weiter veranschaulicht werden, ohne auf die gezeigten Ausführungsformen beschränkt zu sein:

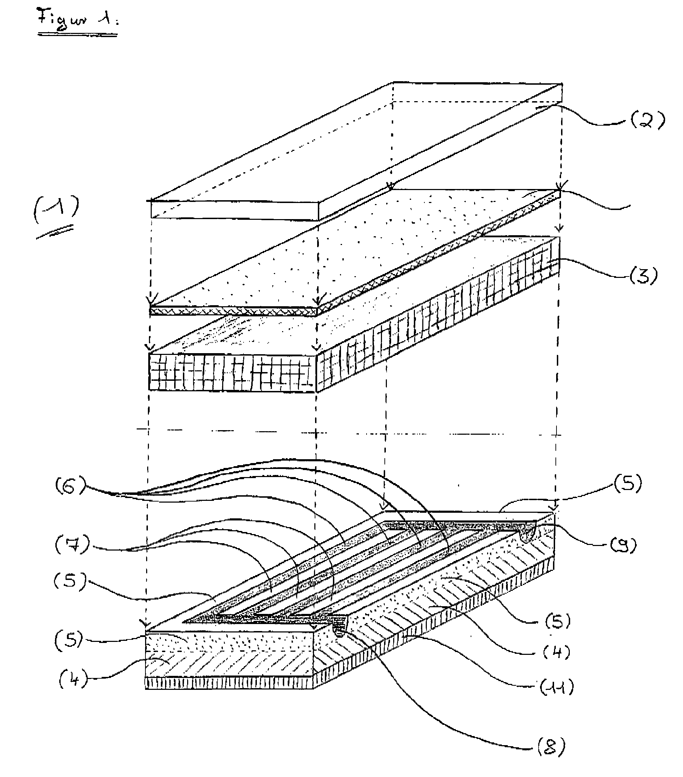

Figur 1 zeigt eine Ausführungsform des erfindungsgemäßen Solarkollektors (1), bei dem eine Basisplatte (4) mit einer umlaufenden Aufkantung (5) eine flüssigkeitsdichte Wanne ausbildet, in der Stege (7) vorgesehen sind, die sich zur Basisplatte (4) hin jeweils in Form eines Vertelkreises verbreitern. Zwischen den Stegen (7) sind Durchflutungskanäle (6) ausgearbeitet, die auf der einen Seite mit einer gemeinsamen, die Aufkantung (5) durchbohrende Zuleitung (8) verbunden sind, durch die eine Flüssigkeit ($F_1$), hier Wasser, den Durchflutungskanälen (6) zugeführt werden kann. Gegenüber der gemeinsamen Zuleitung (8) sind die Durchflutungskanäle (6) mit einer gemeinsamen Abführung (9) verbunden, die ihrerseits die Aufkantung (5) durchbohrt. Durch die gemeinsamen Abführung (9) kann das die Flüssigkeit ($F_1$) aus den Durchflutungskanälen (6) wieder abgezogen werden. Unterhalb der Basisplatte (4), die zusammen mit der umlaufenden Aufkantung (5) und den Stegen (7) als einstückiges Formteil aus Epoxydharz besteht, ist ein Glasfasergewebe (11) dargestellt, das mit der Basisplatte (4) zu deren Verstärkung verklebt ist.

Oberhalb der Basisplatte (4) mit der umlaufenden Aufkantung (5) und den Stegen (7) ist, zeichnerisch davon getrennt dargestellt, eine lichtundurchlässige Aufheizplatte (3) zu sehen, die, auch als Gussteil aus Epoxydharz hergestellt, zur Ausbildung einer sauerstoffdichten Ummantelung des Volumens ($V_1$) im Inneren des durch die flüssigkeitsdichte Wanne begrenzten Raums mit dem einstückigen Formteil aus Basisplatte (4), umlaufender Aufkantung (5) und den Stegen (7) fest verschmolzen ist. Oberhalb der lichtundurchlässigen Aufheizplatte (3) ist zunächst eine mit der lichtundurchlässigen Aufheizplatte (3) fest zu verklebende Kupferplatte (12) und schließlich als lichtdurchlässige Komponente (2) noch eine Glasplatte zu sehen, die in diesem Fall eine Wärmestrahlung vollständig reflektierende Innenprismierung auf der Seite, die zur Aufheizplatte (3) hin orientiert ist, aufweist.

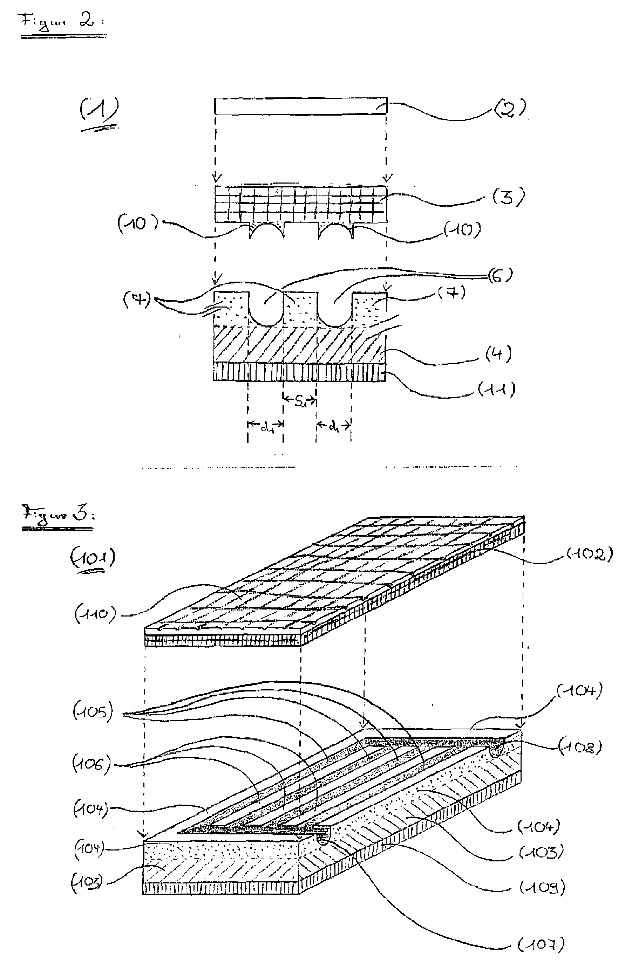

Figur 2 zeigt als Detailzeichnung einen kleinen Bereich des in Figur 1 dargestellten erfindungsgemäßen Solarkollektors (1), hier jedoch in der speziellen Ausführungsform mit an die lichtundurchlässigen Aufheizplatte (3) angeformeten Führunsgstegen (10).

Im unteren Teil der Figur ist zunächst wieder als einstückiges Formteil aus Epoxydharz die Basisplatte (4) mit den angeformten Stegen (7), die sich nach unten zur Basisplatte (4) hin jeweils in Form eines Viertelkreises verbreitern, dargestellt. Die Stege (7) weisen in ihrem oberen Teil jeweils eine einheitliche Breite ($s_1$) auf. Unterhalb der Basisplatte (4) ist ein Glasfasergewebe (11) zu sehen, das mit der Basisplatte (4) zu deren Verstärkung verklebt ist. Die von der Basisplatte (4) getrennt dargestellte lichtundurchlässige Aufheizplatte (3) weist angegossene Führungsstege (10) auf, die passgenau einführbar sind in die Durchflutungskanäle (6) mit einer jeweils einheitlichen Breite ($d_1$). Dabei sind die Durchflutungskanäle (6) zwischen den an die Basisplatte (4) angegossenen Stege (7) ausgebildet. Die Führungsstege (10) weisen außenseitig eine senkrechte Wandung auf, während sie innen halbkreisförmig ausgeformt sind. Eingeführt in die Durchflutungskanäle (6) entstehen durch die spezielle Ausformung der Führungsstege (10) kreisrunde Rohrgebilde, durch die die zugeführte Flüssigkeit ($F_1$), bevorzugt Wasser, turbolenzfrei strömen kann. Oberhalb der lichtundurchlässigen Aufheizplatte (3) ist schließlich als lichtdurchlässige Komponente (2) noch eine Glasplatte dargestellt, wie sie auch in Figur 1 zu sehen ist.

Im dargestellten Fall sollen sowohl die innere Breite ($d_1$) der Durchflutungskanäle (6) wie auch die Breite der Stege (7) in ihrem senkrechten oberen Teil 4 mm betragen. Bei den in den Figuren 1 und 2 dargestellten Solarkollektoren (1) umschließen die Durchflutungskanäle (6) zusammen mit der gemeinsamen Zuleitung (8) und der gemeinsamen Abführung (9) im Inneren des durch die Wanne begrenzten Raums jeweils ein Volumen ($V_1$), wobei die auf das Volumen ($V_1$) bezogene Sauerstoffdichtheit $O_{d,1}$ folgenden Formel genügt:

$$O_{d,1} \leq 0{,}085 \ g \ / \ (m^3 \cdot d_1),$$

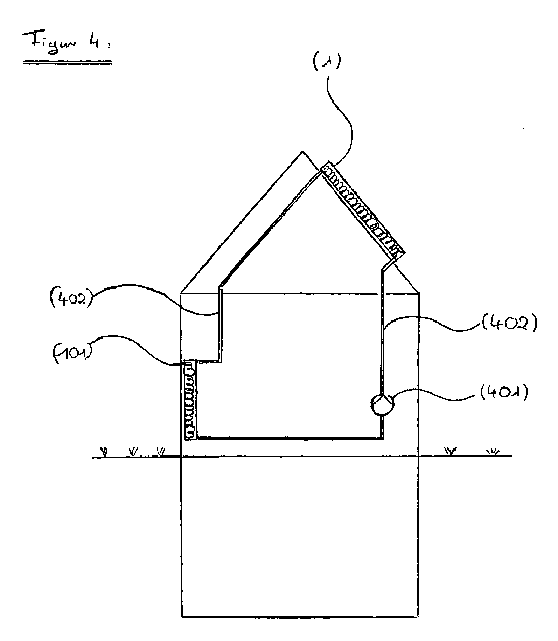

Figur 3 zeigt eine Ausführungsform des mindestens einen wärmeabstrahlenden Elements, ausgebildet als flüssigkeitsdurchflutete Mittel (101) zum Temperieren von Räumen, wie es in verschiedenen Varianten des vorgeschlagenen Solarwärmesystems Verwendung findet. Verbunden mit einer als Basis ausgestalteten zweiten Abdeckplatte (103) bildet eine umlaufende Aufkantung (104) eine flüssigkeitsdichte Wanne, in der Stege (106) vorgesehen sind, die sich zur zweiten Abdeckplatte (103) hin jeweils in Form eines Viertelkreises verbreitern. Zum oberen Abschluss der flüssigkeitsdichten Wanne hin weisen die Stege (106) einheitlich eine in der Figur nicht kenntlich gemachte Breite ($S_{101}$) auf. Zwischen den Stegen (106) sind Durchflutungskanäle (105) ausgearbeitet, die zum oberen Abschluss der Wanne hin eine ebenfalls nicht kenntlich gemachte einheitliche Breite ($d_{101}$) aufweisen. Die Durchflutungskanäle (105) sind auf der einen Seite mit einer gemeinsamen, die Aufkantung (104) durchbohrenden Zuleitung (107) verbunden, durch die eine Flüssigkeit ($F_2$), bevorzugt Wasser, den Durchflutungskanälen (105) zugeführt werden kann. Gegenüber der gemeinsamen Zuleitung (107) sind die Durchflutungskanäle (105) mit einer gemeinsamen Abführung (108) verbunden, die ihrerseits die Aufkantung (104) durchbohrt. Durch die gemeinsame Abführung (108) kann die Flüssigkeit ($F_2$) aus den Durchflutungskanälen (105) wieder abgezogen werden. Unterhalb der zweiten Abdeckplatte (103), die zusammen mit der umlaufenden Aufkantung (104) und den Stegen (106) als einstückiges Formteil aus Epoxydharz besteht, ist ein Glasfasergewebe (109) dargestellt, das mit der zweiten Abdeckplatte (103) zu deren Verstärkung verklebt ist.

Zeichnerisch getrennt von der zweiten Abdeckplatte (103) mit der umlaufenden Aufkantung (104) und den Stegen (106) ist im oberen Teil der Figur die erste Abdeckplatte (102) dargestellt, die ebenfalls als Gussteil in diesem Fall aus Glasfaser verstärktem Polyesterharz hergestellt ist, in den zur Steigerung der thermischen Leitfähigkeit der ersten Abdeckplatte (102) Graphit eingearbeitet ist. Die erste Abdeckplatte (102) ist in diesem Fall mit einer aus angegossenem Material bestehenden Mosaikschicht (110) zur Darstellung einer Befliesung versehen. Als in dieser Figur zeichnerisch nicht dargestellte Möglichkeit können beispielsweise zwischen erster Abdeckplatte (102) und Mosaikschicht (110) eine Lage elektrische Heizfolie (113) oder elektrische Heizleitungen (112) positioniert sein.

Die erste Abdeckplatte (102) und die zweite Abdeckplatte (103) mit umlaufender Aufkantung (104) und den Stegen (106) werden abschließend flüssigkeits-und sauerstoffdicht miteinander verbunden. Auf diese Weise entstehen durch die Stege (106) voneinander getrennte Durchflutungskanäle (105) und die mit ihnen verbundenen gemeinsame Zuleitung (107) und die gemeinsame Abführung (108).

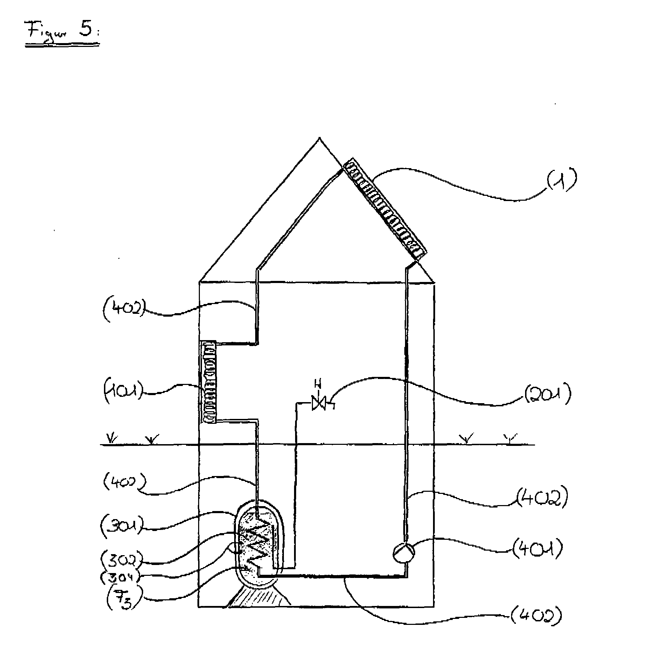

Figur 4 zeigt das erfindungsgemäße Solarwärmesystem in seiner ersten Variante in stark vereinfachter Ausführungsform, wie es in einem Haus montiert ist. Auf dem Dach des Hauses ist zunächst ein Solarkollektor (1) zu sehen, der in einer seiner beanspruchten Ausführungsformen ausgeführt sein soll. Über Rohrverbindungen (402), die hier als Kunststoffrohre ausgeführt sein sollen, welche hinsichtlich ihrer Saustoffdichtigkeit der DIN 4726 in der Fassung aus Januar 2000 genügen, ist der Solarkollektor (1) mit einem wärmeabstrahlendem Element, ausgebildet als flüssigkeitsdurchfiutete Mittel (101) zum Temperieren von Räumen, verbunden. Eine Flüssigkeit ($F_1$), die die Durchflutungskanäle des Solarkollektors (1) durchströmt und dabei durch Sonnenstrahlen erwärmt werden kann, ist auf diese Weise dem wärmeabstrahlenden Element (101) zuführbar, wo die Flüssigkeit ($F_1$) beim Durchströmen der dortigen Durchflutungskanäle ihre Wärme wieder abgibt. Die abgekühlte

Flüssigkeit ($F_1$) kann dann über weitere Rohrverbindungen (402) und mittels einer Pumpe (401) dem Solarkollektor (1) zur erneuten Erwärmung wieder zugeführt werden.

Figur 5 zeigt das erfindungsgemäße Solarwärmesystem in einer weiteren Variante. Erneut ist zunächst auf dem Dach eines Hauses ein Solarkollektor (1) zu sehen, der in einer seiner beanspruchten Ausführungsformen ausgeführt sein soll. Mittels Rohrverbindungen (402) ist der Solarkollektor (1) mit einem wärmeabstrahlenden Element (101) verbunden. Eine Flüssigkeit ($F_1$), die die Durchflutungskanäle des Solarkollektors (1) durchströmt und dabei durch Sonnenstrahlen erwärmt werden kann, ist auf diese Weise dem wärmeabstrahlenden Element (101) zuführbar, wo die Flüssigkeit ($F_1$) beim Durchströmen der dortigen Durchflutungskanäle einen Teil ihrer Wärme abgibt. Mittels weiterer Rohrverbindungen (402) kann die Flüssigkeit ($F_1$) anschließend einer wärmetauschenden Komponente (301) zugeführt werden, welche in einem Innentank (302) Brauchwasser ($F_3$) bevorratet. Zur besonders effektiven Erwärmung des Brauchwassers ($F_3$) durch die Flüssigkeit ($F_1$) wird die Flüssigkeit ($F_1$) in diesem Fall durch spiralförmig verlegte Rohrleitungen (303) im Innentank (302) der wärmetauschenden Komponente (301) geführt. Femer sollen in die Innenwandung des Innentanks (302) elektrische Heizleitungen (304) eingelassen sein, mit denen eine wirkungsvolle Aufheizung des Brauchwassers ($F_3$) auch in den kalten Wintermonaten gewährleistet ist.

Über weitere Rohrverbindungen (402) und mittels einer Pumpe (401) kann die abgekühlte Flüssigkeit ($F_1$) dann dem Solarkollektor (1) zur erneuten Erwärmung wieder zugeführt werden. Das im Innentank (302) der wärmetauschenden Komponente (301) erwärmte und bevorratete Brauchwasser ($F_3$) kann über die Brauchwasserentnahmestelle (201) bei Bedarf entnommen werden. Erneut sollen alle Rohrverbindungen (402) als Kunststoffrohre ausgeführt sein, welche hinsichtlich ihrer Saustoffdichtigkeit der DIN 4726 in der Fassung aus Januar 2000 genügen.

Begriffsliste:

(1) Solarkollektor
(2) Solarkollektor: lichtdurchlässige Komponente
(3) Solarkollektor: lichtundurchlässige Aufheizplatte
(4) Solarkollektor: Basisplatte
(5) Solarkollektor: umlaufende Aufkantung
(6) Solarkollektor: Durchflutungskanäle
(7) Solarkollektor: Stege
(8) Solarkollektor: gemeinsame Zuleitung
(9) Solarkollektor. gemeinsame Abführung
(10) Solarkollektor: Führungsstege
(11) Solarkollektor: Glasfasergewebe
(12) Solarkollektor: Metallplatte
($d_1$) Solarkollektor: innere Breite der Durchflutungskanäle (6)
($s_1$) Solarkollektor: Breite der Stege (7)
($V_1$) Solarkollektor: inneres Volumen

($F_1$) Durch Solarkollektor hindurchführbare Flüssigkeit
($O_{d,1}$) Solarkollektor: Sauerstoffdichtheit
(101) Flüssigkeitsdurchflutete Mittel zum Temperieren von Räumen (wärmeabstrahlendes Element)
(102) Wärmeabstrahlendes Element: erste Abdeckplatte
(103) Wärmeabstrahlendes Element: zweite Abdeckplatte
(104) Wärmeabstrahlendes Element: umlaufende Aufkantung
(105) Wärmeabstrahlendes Element: Durchflutungskanäle
(106) Wärmeabstrahlendes Element: Stege
(107) Wärmeabstrahlendes Element: gemeinsame Zuleitung
(108) Wärmeabstrahlendes Element: gemeinsame Abführung
(109) Wärmeabstrahlendes Element: Glasfasergewebe
(110) Wärmeabstrahlendes Element: Mosaikschicht
(111) Wärmeabstrahlendes Element: Führungsstege
(112) Wärmeabstrahlendes Element: elektrische Heizleitung
(113) Wärmeabstrahlendes Element: elektrische Heizfolie
($d_{101}$) Wärmeabstrahlendes Element: innere Breite der Durchflutungskanäle (105)
($s_{101}$) Wärmeabstrahlendes Element: Breite der Stege (106)
($V_{101}$) Wärmeabstrahlendes Element: inneres Volumen
($F_2$) Durch wärmeabstrahlendes Element hindurchführbare Flüssigkeit ($O_{d,101}$) Wärmeabstrahlendes Element: Sauerstoffdichtheit
(201) Brauchwasserentnahmestelle
(301) Wärmetauschende Komponente
(302) Wärmetauschende Komponente: Innentank
(303) Wärmetauschende Komponente: Rohrleitung zur Führung der Flüssigkeit ($F_1$)
(304) Wärmetauschende Komponente: elektrische Heizleitungen
($F_3$) Brauchwasser
(401) Pumpe
(402) Rohrverbindung

**Patentansprüche**

1. Solarkollektor (1) mit einer sonnenzugewandten ersten Seite und einer ihr gegenüberliegenden zweiten Seite, umfassend

    o mindestens eine lichtdurchlässige Komponente (2) zur Einkopplung von Sonnenstrahlen in den Solarkollektor,
    o eine lichtundurchlässigen Aufheizplatte (3) zur Absorption von Wärme,
o eine Basisplatte (4),

**dadurch gekennzeichnet, dass**

• eine der beiden Platten aus Aufheizplatte (3) und Basisplatte (4) mit einer umlaufenden Aufkantung (5) zur Ausbildung einer zwischen Aufheizplatte (3) und Basisplatte (4) gelegenen flüssigkeitsdichten Wanne verbunden ist,
• im Inneren des durch die Wanne begrenzten Raums eine Vielzahl von Stegen (7) vorgesehen sind, zwischen denen Durchflutungskanäle (6) mit einer inneren Breite ($d_1$) ausgearbeitet sind, wobei
die Durchflutungskanäle (6) mit einer gemeinsamen Zuleitung (8) und einer gemeinsamen Abführung (9) verbunden sind, und
die Durchflutungskanäle (6) zusammen mit der Zuleitung (8) und der Abführung (9) im Inneren des durch die Wanne begrenzten Raums ein Volumen ($V_1$) umschließen, durch das eine Flüssigkeit ($F_1$) zur Abführung der absorbierten Wärme hindurchführbar ist,
• die durch die umlaufenden Aufkantung (5) zusammen mit einer der beiden Platten aus Aufheizplatte (3) und Basisplatte (4) begrenzte Wanne mit der anderen Platte aus Aufheizplatte (3) und Basisplatte (4) verschlossen ist zur Ausbildung einer sauerstoffdichten Ummantelung des Volumens ($V_1$), wobei die auf das Volumen ($V_1$) bezogene Sauerstoffdichtheit $O_{d,1}$ der folgenden Formel genügt:

$$O_{d,1} \leq 0{,}10 \ g \ / \ (m^3 \cdot d_1)$$

2. Solarwärmesystem,

• mit mindestens einem Solarkollektor (1) nach Anspruch 1,
• mit mindestens einem wärmeabstrahlendem Element, ausgebildet als flüssigkeitsdurchflutete Mittel (101) zum Temperieren von Räumen, umfassend

■ eine erste Abdeckplatte (102),
■ eine der ersten Abdeckplatte (102) gegenüberliegende zweite Abdeckplatte (103), die mit einer umlaufenden Aufkantung (104) verbunden ist zur Ausbildung einer flüssigkeitsdichten Wanne,
■ mit einer Vielzahl von Stegen (106), zwischen denen Durchflutungskanäle (105) mit einer inneren Breite ($d_{101}$) im Inneren des durch die Wanne begrenzten Raums ausgebildet sind, wobei

die Durchflutungskanäle (105) mit einer gemeinsamen Zuleitung (107) und einer gemeinsamen Abführung (108) verbunden sind, und
die Durchflutungskanäle (105) zusammen mit der Zuleitung (107) und der Abführung (108) im Inneren des durch die Wanne begrenzten Raums ein Volumen ($V_{101}$) umschließen, durch das eine Flüssigkeit ($F_2$) zum Temperieren von Räumen hindurchführbar ist,

und wobei

■ die durch die zweite Abdeckplatte (103) mit der umlaufenden Aufkantung (104) begrenzte Wanne mit der ersten Abdeckplatte (102) verschlossen ist zur Ausbildung einer sauerstoffdichten Ummantelung des Volumens ($V_{101}$), wobei die auf das Volumen ($V_{101}$) bezogene Sauerstoffdichtheit $O_{d,101}$ der folgenden Formel genügt:

$$O_{d,101} \leq 0{,}10 \ g \ / \ (m^3 \cdot d_{101})$$

3. Solarwärmesystem,

• mit mindestens einem Solarkollektor (1) nach Anspruch 1,
• mit mindestens einer Entnahmestelle (201) von Brauchwasser ($F_3$),
• mit mindestens einer wärmetauschendem Komponente (301) zur Erwärmung des Brauchwassers ($F_3$) mit Hilfe von Flüssigkeit ($F_1$).

4. Solarwärmesystem nach Anspruch 3, **dadurch gekennzeichnet, dass** das Solarwärmesystem zusätzlich mindestens ein wärmeabstrahlendes Element enthält, ausgebildet als flüssigkeitsdurchflutete Mittel (101) zum Temperieren von Räumen, umfassend

■ eine erste Abdeckplatte (102),
■ eine der ersten Abdeckplatte (102) gegenüberliegende zweite Abdeckplatte (103), die mit einer umlaufenden Aufkantung (104) verbunden ist zur Ausbildung einer flüssigkeitsdichten Wanne,
■ mit einer Vielzahl von Stegen (106), zwischen denen Durchflutungskanäle (105) mit einer inneren Breite ($d_{101}$) im Inneren des durch die Wanne begrenzten Raums ausgebildet sind, wobei
die Durchflutungskanäle (105) mit einer gemeinsamen Zuleitung (107) und einer gemeinsamen Abführung (108) verbunden sind, und

die Durchflutungskanäle (105) zusammen mit der Zuleitung (107) und der Abführung (108) im Inneren des durch die Wanne begrenzten Raums ein Volumen ($V_{101}$) umschließen, durch das eine Flüssigkeit ($F_2$) zum Temperieren von Räumen hindurchführbar ist,

und wobei

■ die durch die zweite Abdeckplatte (103) mit der umlaufenden Aufkantung (104) begrenzte Wanne mit der ersten Abdeckplatte (102) verschlossen ist zur Ausbildung einer sauerstoffdichten Ummantelung des Volumens ($V_{101}$), wobei die auf das Volumen ($V_{101}$) bezogene Sauerstoffdichtheit $O_{d,101}$ der folgenden Formel genügt:

$$O_{d,101} \leq 0,10 \text{ g } / (\text{m}^3 \cdot d_{101})$$

5. Solarwärmesystem nach einem der Ansprüche 3 und 4, **dadurch gekennzeichnet, dass** die mindestens eine wärmetauschende Komponente (301) zur Erwärmung des Brauchwassers ($F_3$) mit Hilfe von Flüssigkeit ($F_1$) einen Innentank (302) zur Bevorratung des Brauchwassers ($F_3$) und mäander- und/oder spiralförmige Rohrleitungen (303) zur Führung von Flüssigkeit ($F_1$) enthält.

6. Solarwärmesystem nach Anspruch 5, **dadurch gekennzeichnet, dass** die mindestens eine wärmetauschende Komponente (301) zur Erwärmung des Brauchwassers ($F_3$) mit Hilfe von Flüssigkeit ($F_1$) elektrische Heizmittel (304) zur ergänzenden Erwärmung des Brauchwassers ($F_3$) enthält.

7. Solarkollektor nach Anspruch 1 und Solarwärmesystem nach einem der Ansprüche 2 bis 6, **dadurch gekennzeichnet, dass** mindestens eines der folgenden Merkmale erfüllt ist:

■ die auf das Volumen ($V_1$) bezogene Sauerstoffdichtheit $O_{d,1}$ genügt der folgenden Formel:

$$O_{d,1} \leq 0,085 \text{ g } / (\text{m}^3 \cdot d_1),$$

■ die auf das Volumen ($V_{101}$) bezogene Sauerstoffdichtheit $O_{d,101}$ genügt der folgenden Formel:

$$O_{d,101} \leq 0,085 \text{ g } / (\text{m}^3 \cdot d_{101}).$$

8. Solarkollektor nach einem der Ansprüche 1 und 7 und Solarwärmesystem nach einem der Ansprüche 2 bis 7, **dadurch gekennzeichnet, dass** mindestens eines der folgenden Merkmale erfüllt ist:

■ eine der beiden Platten aus Aufheizplatte (3) und Basisplatte (4) ist mit der umlaufenden Aufkantung (5) einstückig ausgebildet,
■ die zweite Abdeckplatte (103) und die mit ihr verbundene umlaufende Aufkantung (104) sind einstückig ausgebildet.

9. Solarkollektor nach einem der Ansprüche 1, 7 und 8 und Solarwärmesystem nach einem der Ansprüche 2 bis 8, **dadurch gekennzeichnet, dass** mindestens eines der folgenden Merkmale erfüllt ist:

■ eine der beiden Platten aus Aufheizplatte (3) und Basisplatte (4) ist mit den Stegen (7), zwischen denen die Durchflutungskanäle (6) ausgearbeitet sind, einstückig ausgebildet,
■ die zweite Abdeckplatte (103) und die Stege (106), zwischen denen die Durchflutungskanäle (105) ausgebildet sind, sind einstückig ausgebildet.

10. Solarkollektor nach einem der Ansprüche 1, 7, 8 und 9 und Solarwärmesystem nach einem der Ansprüche 2 bis 9, **dadurch gekennzeichnet, dass** mindestens eines der folgenden Merkmale erfüllt ist:

■ eine der beiden Platten aus Aufheizplatte (3) und Basisplatte (4) und die mit einer dieser beiden Platten verbundene umlaufende Aufkantung (5) sind gebildet aus

- einem mindestens 1 mm dickem Material auf Basis von Epoxydharz oder
- einem mindestens 3 mm dickem Material auf Basis von Polyurethanharz oder
- einem mindestens 6 mm dickem Material auf Basis von Polyesterharz,

■ die zweite Abdeckplatte (103) und die mit ihr verbundene umlaufende Aufkantung (104) sind einstückig gebildet aus

- einem mindestens 1 mm dickem Material auf Basis von Epoxydharz oder
- einem mindestens 3 mm dickem Material auf Basis von Polyurethanharz oder
- einem mindestens 6 mm dickem Material auf Basis von Polyesterharz.

11. Solarwärmesystem nach einem der Ansprüche 2 bis 10, **dadurch gekennzeichnet, dass** die erste Abdeckplatte (102) gebildet ist aus

- einem mindestens 1 mm dickem Material auf Basis von Epoxydharz oder
- einem mindestens 3 mm dickem Material auf Basis von Polyurethanharz oder
- einem mindestens 6 mm dickem Material auf Basis von Polyesterharz.

12. Solarwärmesystem nach einem der Ansprüche 2 bis 11, **dadurch gekennzeichnet, dass** mindestens in die erste Abdeckplatte (102) und/oder in die zweite Abdeckplatte (103) elektrische Heizelemente (112, 113) eingebettet sind.

Figur 1.

Figur 2:

(1)

(2)

(3)

(10)                                             (10)

(6)

(7)                                             (7)

(4)

(11)

$\leftarrow S_1 \rightarrow$

$\leftarrow d_1 \rightarrow$   $\leftarrow d_1 \rightarrow$

Figur 3:

(101)                                             (102)

(110)

(104)

(105)                                             (108)

(106)

(104)                                             (104)

(104)                                             (103)

(103)                                             (109)

(107)

Figur 4.

(1)

(402)

(101)

(402)

(401)

Figur 5:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5267611 A
- SU 1165868 A
- DE 19780808 T
- DE 2916799 B1